# EUROPÄISCHE PATENTSCHRIFT

(11) **EP 3 260 346 B1**
(45) Veröffentlichungstag und Bekanntmachung des Hinweises auf die Patenterteilung: **26.11.2025**
(21) Anmeldenummer: 17162728.4
(22) Anmeldetag: 14.08.2015
(51) Int. Cl.: B60W 50/00, B60W 10/22, B60W 50/14

(54) **VERFAHREN, VORRICHTUNG, SYSTEM, COMPUTERPROGRAMM UND COMPUTERPROGRAMMPRODUKT ZUR ANZEIGE VON EINFLUSSFAKTOREN VON FAHRSTRECKENABSCHNITTEN AUF EIN FAHRZEUG**
METHOD, DEVICE, SYSTEM, COMPUTER PROGRAM AND COMPUTER PROGRAM PRODUCT FOR DISPLAYING INPUT FACTORS OF ROAD SECTIONS ON A VEHICLE
PROCÉDÉ, DISPOSITIF, SYSTÈME, PROGRAMME INFORMATIQUE D'AFFICHAGE DES FACTEURS D'INFLUENCE DES SECTIONS DU TRAJET SUR UN VÉHICULE

(30) Priorität: 18.09.2014 DE 102014218806
(43) Veröffentlichungstag der Anmeldung: 27.12.2017
(62) Teilanmeldung aus: 15756863.5
(73) Patentinhaber: Bayerische Motoren Werke Aktiengesellschaft, 80809 München (DE)
(72) Erfinder: Augst, Alexander, 80937 Muenchen (DE)

(56) Entgegenhaltungen:
- WO-A1-2014/108556
- DE-A1- 102012 017 118
- DE-A1- 102012 017 932
- DE-A1- 102014 200 031
- GB-A- 2 492 896
- GB-A- 2 494 528
- US-A1- 2009 164 063
- US-A1- 2012 203 428

## Beschreibung

Die Erfindung betrifft ein Verfahren zur Anzeige von Einflussfaktoren von Fahrstreckenabschnitten auf ein Fahrzeug nach dem Oberbegriff des Anspruchs 1. Die Erfindung betrifft des Weiteren eine Vorrichtung nach dem Oberbegriff von Anspruch 8 und ein System zur Anzeige von Einflussfaktoren von Fahrstreckenabschnitten auf ein Fahrzeug nach dem Oberbegriff von Anspruch 10. Die Erfindung betrifft des Weiteren ein Computerprogramm und ein Computerprogrammprodukt zur Anzeige von Einflussfaktoren von Fahrstreckenabschnitten auf ein Fahrzeug.

In heutigen Fahrzeugen sind immer mehr, beziehungsweise immer modernere Bildschirme angeordnet, auf denen sich viele Informationen anzeigen lassen. Beispielsweise zeigt die zur Bildung des Oberbegriffs der unabhängigen Patentansprüche herangezogene DE 10 2012 017 932 A1 ein Die Erfindung betrifft ein Verfahren zur Unterstützung eines Fahrers beim Führen eines Fahrzeugs im Gelände, wobei eine Umgebung des Fahrzeugs erfasst wird und aus erfassten Umgebungsdaten ein Geländeprofil ermittelt wird und wobei zumindest eine mögliche Trajektorie des Fahrzeugs im vorausliegenden Geländeprofil und auf der Trajektorie auftretende Wankwinkel des Fahrzeugs prognostiziert werden. Dabei wird im Innenraum des Fahrzeugs mittels einer Anzeigeeinheit eine Bildfolge grafisch ausgegeben, wobei das vorausliegende Geländeprofil, eine das Geländeprofil zumindest teilweise überlagernde Darstellung der Trajektorie und eine das Geländeprofil zumindest teilweise überlagernde Darstellung des auf der Trajektorie befindlichen Fahrzeugs ausgegeben werden, so dass sich eine simulierte Fahrt des symbolisch dargestellten Fahrzeugs ergibt und in Abhängigkeit der prognostizierten Wankwinkel für verschiedene Positionen des Fahrzeugs auf der Trajektorie eine Seitenneigung des Fahrzeugs dargestellt wird. Hierfür wird das vorausliegende Gelände mittels einer fahrzeugeigenen Kamera aufgenommen und analysiert. Auch die GB 2494528 A und die WO 2014/108556 A1 sowie die GB 2492896 A analysieren das einem Fahrzeug voraus liegende Gelände mittels einer Kamera und befassen sich dann insbesondere mit der Anpassung der Fahrzeug-Eigenschaften an dieses Gelände, wobei auch geeignete Anzeigen für den Fahrzeugführer erfolgen.

Ferner wird auf die DE 10 2014 200 031 A1 verwiesen, welche ein Verfahren zum Steuern einer aktiven Aufhängung betrifft, wobei das Verfahren Schritte des Bestimmens eines Maßes einer Straßennormalität vor dem Fahrzeug und des Vergleichens des Maßes mit einem Fahrzeugmaß aufweist. Als Reaktion auf den Vergleich wird die Anormalität als ein Typ einer Vielzahl vorbestimmter Typen eingestuft. Als Reaktion auf ein Höhenmaß der Anormalität wird die Anormalität ferner als eine kleine, mittlere und große Schwere aufweisend eingestuft. Die Aufhängung wird als Reaktion auf den Typ und die Schwere gesteuert.

Eine Bildanalyse des direkt vor einem Fahrzeug liegenden Geländes kann lediglich für einen räumlich sehr begrenzten Abschnitt und praktisch nur im hellen Tageslicht erfolgreich durchgeführt werden. Vorliegend soll eine wesentlich weiter reichende Möglichkeit aufgezeigt werden, wie einem Fahrzeugführer vorausliegende Fahrtstreckenabschnitte unter anderem visualisiert werden können (= Aufgabe, die der Erfindung zugrunde liegt).

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich aus durch ein Verfahren gemäß Anspruch 1 zur Anzeige von Einflussfaktoren von Fahrstreckenabschnitten auf ein Fahrzeug. Die Erfindung zeichnet sich des Weiteren aus durch eine Vorrichtung gemäß Anspruch 8, die zu dem Verfahren korrespondiert. Eine erste Information zu einem ersten Fahrstreckenabschnitt wird ermittelt. Eine zweite Information zu einem zweiten Fahrstreckenabschnitt wird ermittelt. Abhängig von der ersten Information wird mindestens ein erster Parametersatz ermittelt, der repräsentativ ist für mindestens einen Einflussfaktor des ersten Fahrstreckenabschnitts auf das Fahrzeug. Abhängig von der zweiten Information wird mindestens ein zweiter Parametersatz ermittelt, der repräsentativ ist für mindestens einen Einflussfaktor des zweiten Fahrstreckenabschnitts auf das Fahrzeug. Abhängig von dem mindestens einen ersten Parametersatz und dem mindestens einen zweiten Parametersatz wird eine Anzeige erzeugt, die einen Einflussfaktor des ersten Fahrstreckenabschnitts und einen Einflussfaktor des zweiten Fahrstreckenabschnitts in Bezug zu einer vorgegebenen Referenzgröße repräsentiert.

Weiterhin wird erfindungsgemäß mindestens ein Parameter des erste Parametersatzes und/oder des zweiten Parametersatzes ermittelt abhängig von Daten, die repräsentativ sind dafür, wie das Fahrzeug auf vorgegebene physikalische Fahrbahneigenschaften reagiert.

Solche Daten können beispielsweise eine Funktion repräsentieren, die eine Weitergabe der auf das Fahrzeug wirkenden Beschleunigungen auf die Fahrgastzelle oder Sitze des Fahrzeugs repräsentieren. Dabei kann es sich um eine, insbesondere systemtheoretische Funktion handeln, die das Fahrzeug oder eine bestimmte Fahrzeugeigenschaft, insbesondere die Eigenschaft, auf Beschleunigungseinwirkungen zu reagieren oder solche, z.B. von den Rädern zu den Sitzen oder Lenkrad zu übertragen, insgesamt erfasst. Die Daten können auch bestimmte Eigenschaften mechanischer und/oder hydraulischer und/oder mechatronischer Systeme des Fahrzeugs, insbesondere systemtheoretisch, repräsentieren. Dabei kann auch z.B. berücksichtigt werden, welche vertikaldynamischen Frequenzen wie gut durch elektronische Fahrzeugsysteme gedämpft werden können.

Gemäß einer vorteilhaften Ausgestaltung werden der erste und der zweite Parametersatz abhängig von der aktuellen Beladung und/oder von der aktueller Sitzbelegung und/oder der aktueller Achslastverteilung des Fahrzeugs ermittelt. Dabei kann es sich bei den Eigenschaften des Fahrzeugs um permanente Eigenschaften und/oder um den aktuellen oder einem erwarteten Zustand einer veränderlichen Eigenschaft handeln.

Erfindungsgemäß beziehen sich der erste und der zweite Fahrstreckenabschnitt auf eine bevorstehende, insbesondere mögliche, Fahrt mit dem Fahrzeug. Die Fahrstreckenabschnitte sind solche Fahrstreckenabschnitte, die in den nächsten Fahrminuten oder Stunden vom Fahrzeug befahren werden können, also Fahrstrecken, die sich auf die Zukunft beziehen. Zumindest einer der Fahrstreckenabschnitte kann sich auch alternativ oder zusätzlich auf die nahe Zukunft von beispielsweise weniger als 5 Sekunden, 20 Sekunden oder 45 Sekunden beziehen. Dabei kann der entsprechende Fahrstreckenabschnitt einen dem Fachmann bekannten aktuellen Bahnführungshorizont betreffen, insbesondere einem Fahrstreckenabschnitt, der sich bis zu 200 Meter in die Umgebung des Fahrzeugs erstreckt. Fahrstreckenabschnitte können beispielsweise eine Ausdehnung von weniger als 10 Meter, 100 Meter, 1 Kilometer oder 10 Kilometer haben. Diese können auch eine oder mehrere bestimmte Spuren einer Straße betreffen oder ein frei befahrbares Gelände, beispielsweise auch eine konkrete Strecke innerhalb eines in zwei Richtungen ausgedehnten frei befahrbares Geländes sein.

Die erste Information und die zweite Information können Koordinatendaten umfassen, die repräsentativ sind für einen Fahrstreckenabschnitt oder einen größeren Bereich der Fahrstrecke, zu dem der Fahrstreckenabschnitt gehört. Die Fahrstrecke kann den Verlauf der Fahrstrecke in Form von Koordinaten und/oder Eigenschaften der Fahrstrecke umfassen.

Ein Parametersatz kann aus einem oder mehreren Parametern bestehen. Ein Parameter kann beispielsweise einen Wert, eine Zuordnungstabelle und/oder eine mathematische Funktion repräsentieren. Ein Parametersatz kann abhängig von der Information ermittelt werden, insbesondere dadurch, dass ein oder mehrere Parameter anhand der Information aus einem Speicher, einer Datenbank, einem Server abgerufen werden. Der Parametersatz kann auch nach vorausbestimmten mathematischen Zusammenhängen mit Mitteln der Datenverarbeitung ermittelt werden.

Bei einer vorteilhaften Weiterbildung des Verfahrens kann das Verfahren gleichzeitig auf mehrere, z.B. drei, vier oder mehr Fahrstreckenabschnitte angewandt werden. Somit ergibt sich unter anderem die Möglichkeit für den Fahrer des Fahrzeugs eine für ihn, hinsichtlich bestimmter Einflüsse auf das Fahrzeug, am besten passende Option auszuwählen.

Bei dem Fahrzeug, das vom Fahrstreckenabschnitt beim Befahren beeinflusst wird, kann es sich z.B. um ein konkretes oder, beispielsweise statistisches Referenz-Fahrzeug mit statistisch durchschnittlichen Eigenschaften handeln. Besonders bevorzugt handelt es sich bei dem Fahrzeug, auf welches sich die Einflussfaktoren beziehen, um das Fahrzeug derselben Klasse, wie das Fahrzeug in dem die Anzeige dargestellt wird. Ganz besonders bevorzugt beziehen sich die Einflussfaktoren auf das Fahrzeug, in dem die Anzeige erzeugt wird.

Es handelt sich bei der Anzeige um eine innerhalb des Fahrzeugs erzeugte oder gezeigte grafische Darstellung oder eine Sequenz aus grafischen Darstellungen, beispielsweise eine animierte Grafik, eine Animation oder eine Videosequenz. Die Anzeige kann auf einem Informationsdisplay des Fahrzeugs, im sogenannten Kombiinstrument, im sogenannten Head-Up-Display oder auf einem Bildschirm erzeugt werden, das mit dem Fahrzeug verbunden ist oder sich im Fahrzeug befindet. Die Anzeige kann zwei oder dreidimensional wahrnehmbar ausgestaltet sein.

Durch das gezeigte Verfahren erhält ein Fahrzeugführer eine gute Übersicht über Einflussfaktoren mehrerer Straßenabschnitte. Somit kann der Fahrzeugführer auf einfache Weise sehen, ob eine Strecke beispielsweise holpriger ist als eine andere Strecke und sich dann bewusst für eine der beiden entscheiden. Will er beispielsweise das Fahrzeug schonen, so kann er die weniger holprige wählen. Will er bewusst eine holprigere Strecke wählen, so kann er dies auch tun. Weiterhin kann er so eine Strecke nach seinem Geschmack wählen, ohne sich zu verschätzen.

Weiterhin ermöglicht das Verfahren eine unkomplizierte und besonders intuitive Übermittlung von Informationsinhalten an den Fahrer bzw. Insassen des Fahrzeugs. Diese ermöglichen auch eine sehr gute Übereinstimmung zwischen der Erwartung zu einem Fahr-Erlebnis auf einer gewählten Fahrstrecke und dem Fahr-Erlebnis, das dort tatsächlich eintritt. Dies wird ermöglicht, auch ohne dass der Fahrer sich mit komplexer Materie der Beeinflussung des Fahrzeugs durch unterschiedliche Gegebenheiten der Fahrbahn auskennt. Ein weiterer Vorteil ergibt sich beispielsweise beim Transport empfindlicher Güter und/oder schlafender Kinder und Ähnlichem.

Durch den Bezug zur Referenzgröße erhält der Fahrer eine noch intuitivere Information, da er somit den Streckenabschnitt mit beispielsweise schon befahren Streckenabschnitten vergleichen kann.

Gemäß einer vorteilhaften Ausgestaltung werden der erste Parametersatz und der zweite Parametersatz abhängig von mindestens einer physikalischen Fahrbahneigenschaft des jeweiligen Fahrstreckenabschnitts ermittelt, bevorzugt abhängig von einer bestimmten Kombination unterschiedlicher Fahrbahneigenschaften der jeweiligen Fahrstreckenabschnitte.

Bevorzugt werden der erste Parametersatz und der zweite Parametersatz in Abhängigkeit von im Wesentlichen derselben und/oder entsprechend passender physikalischen Fahrbahneigenschaft ermittelt. Dabei kann es sich bei den Einflussfaktoren um physikalische, insbesondere mechanische Einflussfaktoren, z.B. Krafteinwirkungen oder Vibrationen, insbesondere einer bestimmten Art und/oder Amplitude und/oder eines bestimmten Amplitudenverlaufs und/oder Kräfteverlaufs, und ähnlichem handeln.

Vorteilhafterweise wird der erste Parametersatz und/oder der zweite Parametersatz jeweils abhängig von einer bestimmten Kombination unterschiedlicher Fahrbahneigenschaften der jeweiligen Fahrstreckenabschnitte ermittelt, wobei zumindest ein oder zwei Parameter repräsentativ sind für dieselben Einflussfaktoren, beispielsweise bestimmte physikalische Fahrbahneigenschaften.

Gemäß einer vorteilhaften Ausgestaltung repräsentieren zumindest ein Parameter des ersten Parametersatzes und/oder zumindest ein Parameter des zweiten Parametersatzes einen vertikaldynamischen Einfluss auf das Fahrzeug, insbesondere der auf die Fahrgastzelle des Fahrzeugs wirkenden vertikaldynamischen Beschleunigungseinflüsse.

Vertikaldynamische Beschleunigungen umfassen hierbei beispielsweise Wankbeschleunigung und/oder Nick-Beschleunigung, und/oder Hubbeschleunigungen. Besonders bevorzugt repräsentiert dabei der erste Parametersatz und/oder der zweite Parametersatz eine Kombination aus den Werten, die von dieser Art der Beschleunigungen, bevorzugt eineindeutig abhängig sind.

Der erste und/oder der zweite Parametersatz können dabei einen statistischen Wert repräsentieren, der zum Beispiel bestimmte vertikaldynamische Einflüsse auf das Fahrzeug, bevorzugt in Bezug auf zumindest zwei unterschiedliche Frequenzbereiche, insbesondere Ortsfrequenzbereiche, repräsentiert.

Dabei kann das Verfahren einen Schritt zum Ermitteln eines vertikaldynamischen Einflusses auf das Fahrzeug, zum Beispiel auch aus Datenbankinformationen, umfassen. Ein solcher vertikaldynamischer Einfluss kann in Abhängigkeit der ermittelten Fahrbahneigenschaften einen Einfluss oder mehrere Einflüsse dieser Eigenschaften auf ein Fahrzeug oder das Fahrzeug umfassen.

Dabei können die Einflüsse, zum Beispiel physische Beschleunigungseinflüsse sein und/oder sich dabei auf eine oder mehrere Geschwindigkeitswerte, beispielsweise bestimmte Referenzgeschwindigkeitswerte beziehen, mit welchen die Fahrstrecke durch ein Fahrzeug befahren wird. Zum Beispiel können die Einflüsse für 1-5 verschiedene Geschwindigkeitswerte ermittelt werden, die für die Fahrstreckenabschnitt typisch sind, wie zum Beispiel 30 km/h, 50, km/h, 60 km/h, 120 km/h, 180 km/h. Solche Referenzgeschwindigkeitswerte können in Abhängigkeit der Straßenart oder anhängig von konkreten statistischen Werten, die die Fahrstrecke betreffen, gewählt werden. Somit lässt sich die Anzahl der zu ermittelnden Werte reduzieren und passendere Parameter ermitteln.

Das Ermitteln eines oder zwei Parameter, der eine signifikante Abhängigkeit von vertikaldynamischen Beschleunigungen von der Information zu einer Fahrstrecken aufweist, ist besonders vorteilhaft, weil durch solche Parameter auch ein Maß für ein Offroad-Fahrerlebnis repräsentiert werden kann. Wie der Fachmann weiß, kann ein Offroad-Fahrerlebnis mit typischen oder bestimmten auf das Fahrzeug und den Fahrer wirkenden Beschleunigungen oftmals explizit gewünscht oder explizit nicht gewünscht sein. Es kann auch nur ein bestimmtes Offroad-Fahrerlebnis, zum Beispiel nur tiefere Frequenzen mit einer auf einen bestimmten Wert begrenzten Amplitude gewünscht sein. Hierdurch kann ein solches Offroad-Fahrerlebnis in Bezug auf zwei oder mehrere Fahrstreckenabschnitte, die das Fahrzeug in der nahen Zukunft befahren wird oder kann, für den Fahrer des Fahrzeugs durch die Anzeige sehr anschaulich repräsentiert werden.

Gemäß einer vorteilhaften Ausgestaltung werden der erste Parametersatz und der zweite Parametersatz jeweils aus einer vorgegebenen Kombination der Fahrbahneigenschaften, die unterschiedlichen Klassen von Fahrbahneigenschaften angehören, ermittelt.

Solche bestimmten Kombinationen von Fahrbahneigenschaften können beispielsweise auch vorab, anhand mehrerer an sich relativ abstrakter Wünsche optimiert werden. Derartige Wünsche umfassen beispielsweise einen möglichst schonenden Umgang mit dem Fahrzeug und/oder eine Verringerung von auf den Fahrer oder Insassen wirkende Beschleunigungen (Querbeschleunigungen, Nickbeschleunigung, Rollbeschleunigungen, etc.) und/oder Vibrationen und/oder ein bestimmtes Fahrerlebnis und/oder eine gewünschte Kombination dieser Einflussfaktoren.

Bei der Auswahl von Kombinationen der Einflussfaktoren können auch Gewichtungsfaktoren bestimmt werden, die ein Maß für Berücksichtigung zumindest zwei verschiedenen Einflussfaktoren beim Ermitteln des entsprechenden Parameters bestimmen.

Somit kann mittels des Verfahrens und dem entsprechenden Fahrzeug einem bestimmten objektiven oder subjektiven Wunsch eines Fahrzeugfahrers nach einem bestimmten Fahrerlebnis, Charakter des Fahrzeugs z.B. einer hierfür geeigneten oder optimalen Routenwahl gerecht werden.

Gemäß einer vorteilhaften Ausgestaltung betrifft eine Klasse von Fahrbahneigenschaften permanente physikalische Fahrbahnunebenheiten.

Die permanenten physikalischen Fahrbahnunebenheiten umfassen insbesondere vertikale Fahrbahnunebenheiten im Wesentlichen in Längsrichtung und/oder im Wesentlichen in Querrichtung, insbesondere in einem ersten Ortsfrequenzbereich und/oder in einem zweiten Ortsfrequenzbereich.

Die permanenten physikalischen Fahrbahnunebenheiten umfassen alternativ oder zusätzlich ein Vorhandensein zumindest eines vorgegebenen Unebenheitsmuster der Fahrbahn, und/oder zumindest ein quantitatives für ein Unebenheitsmuster der Fahrbahn, und/oder eine relative Gewichtung von mehreren Mustern vorgegebener Art.

Ein Unebenheitsmuster kann eine Fahrbahnwelle, ein Schlagloch, eine, beispielsweise regelmäßig vorkommenden Spalt zwischen den Betonplatten, eine Spurrinne, etc. sein. Ein quantitatives Maß kann in Abhängigkeit eines geometrischen Maßes, zum Beispiel Tiefe und/oder Höhe und/oder Formfaktor und/oder Häufigkeit des Unebenheitsmusters gewählt werden.

Die permanenten physikalischen Fahrbahnunebenheiten umfassen alternativ oder zusätzlich insbesondere ein Maß für Querbeschleunigungen, die auf ein Fahrzeug oder das Fahrzeug beim Befahren des Fahrstreckenabschnitts wirken in Bezug auf eine oder mehrere Geschwindigkeiten oder in einer Form die auf Geschwindigkeitswert normiert ist.

Wenn der Fahrer beispielsweise viele Stunden, zum Beispiel in den Urlaub mit Kindern fährt oder wenn ein LKW-Fahrer empfindliche Güter zu transportieren hat, so wollen die Fahrer in beiden Fällen die wirkenden Querbeschleunigungen, zumindest im Verhältnis zur Fahrgeschwindigkeit minimieren um beispielsweise die Kinder nicht aufzuwecken und/oder die Güter nicht zu beschädigen.

Gemäß einer vorteilhaften Ausgestaltung betrifft eine Klasse von Fahrbahneigenschaften physikalische Beschleunigungseinflüsse auf das Fahrzeug oder ein anderes Fahrzeug, insbesondere vertikaldynamische Beschleunigungseinflüsse auf das Fahrzeug in Längsrichtung und/oder im Wesentlichen in Querrichtung, die auf das Fahrzeug oder ein anderes Fahrzeug in Bezug auf eine oder mehrere Fahrgeschwindigkeiten in einem ersten Frequenzbereich und/oder in einem zweiten Frequenzbereich zu erwarten sind.

Die Frequenzbereiche umfassen insbesondere Ortsfrequenzbereiche. Der Ortsfrequenzbereich einer Fahrstrecke bezieht sich insbesondere auf die Welligkeit der Fahrbahn in Bezug auf die Welligkeit mit einer bestimmten Ausdehnung in Längs- oder Querrichtung. Der Ortsfrequenzbereich wird insbesondere mittels einer zeitdiskreten Fourier-Analyse ermittelt, insbesondere mittels einer Fourier-Transformation. Als Fourier-Transformation ist hier zusammenfassend eine Methode der Fourier-Analyse bezeichnet, die es erlaubt, kontinuierliche, aperiodische Signale in ein kontinuierliches Spektrum zu zerlegen. Die Funktion, die dieses Spektrum beschreibt, wird auch bezeichnet als Fourier-Transformierte oder Spektralfunktion. Im Wesentlichen umfasst die Ermittlung des Ortsfrequenzbereich die Bildung einer Spektralfunktion bevorzugt mit diskreten Formen der Fourier-Analyse, beispielsweise mittels einer schnellen Fourier-Transformation (FFT), einer Cosinustransformation und/oder einer modifizierten diskreten Cosinustransformation (MDCT), aufgelöst nach einem Ort, bzw. nach einer Information, die den Ort repräsentiert.

Besonders bevorzugt handelt es sich um zumindest zwei unterschiedliche Ortsfrequenzbereiche der Fahrstrecke oder Ortsfrequenzbereiche in Bezug auf das fahrende Fahrzeug, weil das von den Fahrzeuginsassen empfundene Fahrerlebnis von diesen stark abhängig ist. Ein erster Frequenzbereich kann zum Beispiel in etwa 0,2 - 30 Hz sein. Ein solcher Bereich ist oftmals von Fahrern von Offroad-Fahrzeugen aufgrund eines bestimmten damit verbundenen kinästhetischen Erlebnisses stark favorisiert. Ein zweiter Frequenzbereich kann zum Beispiel in etwa 20 Hz - 350 Hz sein. Dabei handelt es sich wiederum um Vibrationen, die durch das Gehörsystem und auch direkt körperlich wahrgenommen werden. Frequenzen aus diesem Bereich erzeugen bei den Insassen des Fahrzeugs ein deutlich unterscheidbares Erlebnis als Frequenzen aus dem ersten Bereich.

Somit kann der Fahrer des Fahrzeugs anhand der Anzeige abschätzen, welche der zwei, zum Beispiel zur Auswahl stehenden (Offroad-)Fahrstrecken für ihn die beste ist. Die Anzeige kann dabei grafisch sehr anschaulich gestaltet sein und den entsprechenden Parameter zu einer, zum Beispiel bereits erlebten Fahrstrecke in einer Gegenüberstellung veranschaulichen, sodass der Fahrer ein vorhergesagtes Erlebnis zu einer ersten Fahrstrecke und/oder zweiten Fahrstrecke mit einem bereits gemachtem Erlebnis vergleichen kann. Somit muss er sich nicht mit wenig aussagekräftigen Absolutwerten beschäftigen und nicht notwendigerweise mit den Frequenzbereichen auskennen.

Dabei repräsentiert die Anzeige einen Einflussfaktor des ersten Fahrstreckenabschnitts und einen Einflussfaktor des zweiten Fahrstreckenabschnitts in Bezug zu einer vorgegebenen Referenzgröße. Die Referenzgröße wird abhängig von einer Information ermittelt, die repräsentativ ist für mindestens einen Einflussfaktor eines Fahrstreckenabschnitts, der bereits in der Vergangenheit von dem Fahrer des Fahrzeugs und/oder von dem Fahrzeug befahren wurde oder aktuell befahren wird.

Besonders bevorzugt umfasst die Referenzgröße einen historischen Wert, insbesondere in Bezug auf das Fahrzeug und/oder den Fahrer des Fahrzeugs. So kann es sich beispielsweise um einen historischen Wert eines jeweiligen Parameters handeln. Dabei kann sich der historische Wert insbesondere auf die letzten weniger als 50, 100, 1000 km beziehen, und/oder auf die Fahrstrecken derselben Art (z.B. Autobahnen, Bundesstraßen, Landstraßen, Feldwege, Offroadstrecken), insbesondere solche, die in einer Navigationskarte als dieselbe Klasse der Fahrstrecken enthalten sind.

Dabei können die vom Fahrer beim Fahren anderer Fahrzeuge, gesammelte Werte, beispielsweise zusammen mit anderen personenbezogenen Einstellungen, in das erfindungsgemäße Fahrzeug übertragen werden.

Auch kann sich die Referenzgröße auf einen aktuellen, insbesondere gemessenen, Wert des Parameters beziehen.

Ein derart gewählte oder vom Fahrer wählbare Referenzgröße erlaubt dem Fahrer die in der Anzeige repräsentierte ermittelte Prognose für eine oder zwei alternative zur Auswahl stehende Fahrstreckenabschnitte mit einem von ihm erlebten Wert zu vergleichen. Ist ihm die Straße beispielsweise zu holprig, kann er eine Straße, die zumindest 30% weniger holprig ist, suchen.

Gemäß einer vorteilhaften Ausgestaltung umfassen der erste Parametersatz und/oder der zweite Parametersatz zumindest zwei Parameter, welche abhängig von zumindest zwei von folgenden Einflussfaktoren des Fahrstreckenabschnitts ermittelt werden: zumindest einem statistischen Wert und/oder zumindest einem qualitativen Wert zur Art des Einflussfaktors, und/oder zumindest einem Verlaufswert des Einflussfaktors in Bezug auf Fahrtzeit oder Position.

Vorteilhafterweise kann der statistische Parameter des ersten oder des zweiten Parametersatzes eine Kumulation einer physikalischen Fahrbahneigenschaft repräsentieren, die bevorzugt einer bestimmten Klasse von Fahrbahneigenschaften angehört, insbesondere im Verlauf des ersten oder des zweiten Fahrstreckenabschnitts.

Der zumindest eine qualitative Wert gibt Hinweis zu der Art der physikalischen Fahrbahneigenschaft und/oder zu der Art des Einflusses auf das Fahrzeug.

Der Verlaufswert kann eine Veränderung der Einflussgröße im Verlauf des Fahrstreckenabschnitts, z.B. auch einen Verteilungswert, repräsentieren. Vorteilhafterweise kann der Verlaufswert eine Veränderungstendenz der jeweiligen Einflussgröße, zum Beispiel Anstiegs-, Abfall-, Verteilungseigenschaften, etc. repräsentieren. Dieser kann bei dem Ermitteln des ersten und/oder zweiten Einflussfaktors berücksichtigt werden. Dabei können auch einhergehend mit jeweils unterschiedlichen Verlaufswerten der Einflussgrößen Verlaufswerte der Wechselwirkungen zwischen zwei oder mehreren Parametern innerhalb des jeweiligen Fahrstreckenabschnitts ermittelt bzw. berücksichtigt werden.

Dabei kann die Anzeige auch Einflussfaktoren des ersten Fahrstreckenabschnitts und die Einflussfaktoren des zweiten Fahrstreckenabschnitts in Abhängigkeit von den ermittelten Verlaufswerten der Wechselwirkungen zwischen zumindest zwei Parametern jeweiliger Parametersätze innerhalb jeweiliger Fahrstreckenabschnitte umfassen.

Gemäß einer vorteilhaften Ausgestaltung wird für die Anzeige eine grafische Darstellung durch eine Zuordnung oder Umrechnung nach einer vorgegebenen Formel der Parameter des ersten und/oder des zweiten Parametersatzes zu grafischen Elementen erzeugt.

Dabei kann die Anzeige aus den derart ermittelten grafischen Elementen zusammengesetzt werden. Bei den grafischen Elementen kann es sich um vorgefertigte, bereits im Speicher abgelegte Elemente, wie so genannten Bitmaps, handeln. Die Anzeige kann alternativ oder zusätzlich auch mit an sich bekannten Mitteln der Simulation bzw. mathematischer Modellierung erzeugt werden.

Besonders bevorzugt repräsentiert diese die Gegenüberstellung eines ersten Parametersatzes und eines zweiten Parametersatzes und einer Referenzgröße zueinander, wobei die Referenzgröße bevorzugt einen statistischen Wert, der zu den Einflussfaktoren passt, darstellt.

Ein weiterer wesentlicher Teil des gezeigten Verfahrens betrifft eine Repräsentation zumindest zweier Einflussfaktoren auf das Fahrzeug in einer symbolischen Form. Dabei umfasst die Anzeige bevorzugt eine symbolische Abbildung für das Fahrzeug und/oder für einen oder mehrere Einflussfaktoren.

Besonders bevorzugt verändert sich dabei das Aussehen der symbolischen Abbildung, insbesondere die angezeigten Symbole oder das Aussehen eines derart dargestellten Fahrzeugs in Abhängigkeit der ermittelten Einflussfaktoren.

Dabei kann das Verfahren einen weiteren Schritt umfassen, bei dem für einen oder mehrere Einflussfaktoren mehrere Grafiken dargestellt werden, die einen unterschiedlichen Zustand des Fahrzeugs darstellen. Dabei kann es sich bei dem Zustand des Fahrzeugs um eine Verformung des Fahrzeugs in einer oder mehreren Abstufungen handeln. Gemäß einer vorteilhaften Ausgestaltung wird für die Anzeige zumindest ein statistischer Wert mittels Veränderung einer symbolischen Darstellung des Fahrzeugs repräsentiert und/oder zumindest ein qualitativer Wert zur Art des Einflussfaktors mittels Veränderung einer weiteren symbolischen Darstellung des Fahrzeugs repräsentiert und/oder zumindest ein Verlaufswert eines Parameters mittels eines, insbesondere symbolischen, Verlaufs nach Fahrtzeit oder nach Fahrstrecke repräsentiert.

Besonders bevorzugt kann die Anzeige eine symbolische Darstellung des Fahrzeugs umfassen, wobei ein Teil der Anzeige den Zustand des Fahrzeugs in Abhängigkeit von den Einflussgrößen des ersten Fahrstreckenabschnitts und ein weiterer Teil des Fahrzeugs in Abhängigkeit von dem zweiten Fahrstreckenabschnitt dargestellt wird. Der Zustand des Fahrzeugs kann eine symbolische und/oder imaginierte Form umfassen. Besonders bevorzugt ist eine übertriebene Darstellung, das bedeutet dass das Fahrzeug nach dem Befahren der Fahrstrecke nicht unbedingt so aussehen muss, wie in der Anzeige dargestellt. Die Anzeige kann mehrere Grafiken oder Varianten einer Grafik umfassen, die eine Verwandlung des symbolisch dargestellten Fahrzeugs abhängig von den ermittelten Parametersätzen darstellen, die erforderlichen Eigenschaften des Fahrzeugs symbolisiert, um die Fahrstrecke zu befahren.

Alternativ oder zusätzlich kann die Anzeige auch eine oder mehrere, insbesondere in einem weiteren Schritt des Verfahrens generierte Diagramme repräsentieren. Diese können einen statistischen Wert und/oder einen Verlaufswert eines oder mehrerer Einflussfaktoren in einer grafischen Form visualisieren. Zusätzlich kann die Anzeige auch Zahlenwerte umfassen.

Gemäß einer vorteilhaften Ausgestaltung umfassen der erste und der zweite Fahrstreckenabschnitt jeweils einen Teil von zumindest zwei alternativen Routen des Fahrzeugs, wobei die alternativen Routen sich bevorzugt auf dasselbe Ziel oder Zwischenziel beziehen.

Dabei umfassen der erste Fahrstreckenabschnitt und der zweite Fahrstreckenabschnitt zumindest teilweise Teile einer vorgegebenen Fahrzeugroute.

Bevorzugt können die Fahrstreckenabschnitte, beispielsweise aufeinanderfolgende, insbesondere unmittelbar aufeinanderfolgende Fahrstreckenabschnitte sein. Alternativ können die Fahrstreckenabschnitte ausgewählte, zum Beispiel besonders kritische Fahrstreckenabschnitte einer Route sein.

Dabei wird die erste Information und/oder die zweite Information ermittelt in Abhängigkeit von einem Bereitstellen eines Ziel eines im Fahrzeug betriebenen Navigationssystems, und/oder einem Bereitstellen einer Navigationskarte, und/oder einem Bereitstellen von Daten, die von einem Server außerhalb des Fahrzeugs bereitgestellt werden, insbesondere einschließlich Abruf der Daten in Abhängigkeit von zumindest einer Information über das Ziel oder einer Information aus einer Navigationskarte.

Gemäß einer vorteilhaften Ausgestaltung werden die erste Information und/oder die zweite Information in Abhängigkeit von einer Wahrscheinlichkeitsberechnung zu der Route des Fahrzeugs ermittelt, insbesondere bezüglich der Wahrscheinlichkeit zu der Auswahl des ersten Fahrstreckenabschnitts und des zweiten Fahrstreckenabschnitts.

Dabei kann im Rahmen des Verfahrens aus der Wahrscheinlichkeitsinformation ermittelt werden, welche Fahrstreckenabschnitte mit welcher Wahrscheinlichkeit befahren werden. Dies kann anhand einer ermittelten oder geschätzten Wahrscheinlichkeit zu Abbiegerichtungen, Ein- und Ausfahrten, Abzweigungen, Kreisverkehrsausfahrten, etc. ermittelt werden, die das Fahrzeug nehmen wird. Die Wahrscheinlichkeitswerte können auch aus statistischen Werten in Bezug auf das Fahrzeug oder mehrere Fahrzeuge ermittelt werden.

Gemäß einer vorteilhaften Ausgestaltung wird eine Information zu zumindest einer Maßnahme abhängig von mindestens einem Parameter des ersten Parametersatzes und/oder des zweiten Parametersatzes ermittelt, die den jeweiligen Einflussfaktor auf das Fahrzeug, insbesondere auf eine bestimmte Weise oder im vorausbestimmten Maße, verändert. Das Verfahren umfasst ferner einen der folgenden Schritte: Visualisieren einer Information zu der ermittelten Maßnahme und/oder Visualisieren einer Bedienaktion des Fahrers, die zu der Maßnahme führt, und/oder eine Aktivierung der Maßnahme mit Mitteln des Fahrzeugs und Visualisieren einer Information für den Fahrer über diese Aktivierung, bevorzugt in der Anzeige.

Dabei kann die Maßnahme beispielsweise einhergehend mit der Anzeige vorgeschlagen, automatisch umgesetzt oder zu einer Umsetzung vorbereitet werden.

Gemäß einer vorteilhaften Ausgestaltung umfasst die Maßnahme eine oder mehrere Umschaltoptionen für das Fahrwerk des Fahrzeugs und/oder für ein Fahrerassistenzsystem des Fahrzeugs, wobei bevorzugt bei mehreren Optionen eine jeweilige ermittelte oder abgeschätzte Wirkung repräsentiert wird.

Beispielsweise kann angezeigt werden, welche Wirkung es hätte, wenn das Fahrwerk straffer oder weicher, höher oder niedriger eingestellt wird. Weiterhin kann beispielsweise angezeigt werden, welche Wirkung es hätte, auf einen Allradantrieb oder mehrere zur Verfügung stehende Varianten eines Allradbetriebs umzuschalten und Ähnliches.

Beispielsweise kann angezeigt werden, welche Wirkung es hätte, wenn ein Fahrerassistenzsystem welches Informationen, insbesondere Warnungen oder Handlungsempfehlungen, z.B. bezüglich Bahnführung des Fahrzeugs, an den Fahrer ausgibt und/oder in die Längsdynamik oder Querdynamik des Fahrzeugs eingreift, auf eine oder mehrere Umschaltoptionen, insbesondere andere, als aktuell aktiven Umschaltoptionen umgeschaltet wird.

Beispielsweise kann sich dabei die Empfindlichkeit oder eine Reaktion eines Fahrerassistenzsystems von bestimmten Einflussfaktoren bzw. auf bestimmte Einflussfaktoren verändert werden.

Dabei kann, z.B. mittels Symbolen, angezeigt werden, welche Wirkung es jeweils hätte, auf die zumindest zwei zur Verfügung stehende Umschaltoptionen des Fahrerassistenzsystems umzuschalten.

Gemäß einer vorteilhaften Ausgestaltung werden Daten über die Fahrbahnbeschaffenheit mittels eines oder mehrerer perzeptiver Sensoren des Fahrzeugs ermittelt. Die erste Information zu dem ersten Fahrstreckenabschnitt und/oder die zweite Information zu dem zweiten Fahrstreckenabschnitt und/oder die Referenzgröße werden in Abhängigkeit von den Daten ermittelt.

Besonders bevorzugt wird zumindest die Referenzgröße auf diese Weise ermittelt. Somit kann der Fahrer des Fahrzeugs mittels der Anzeige, die zumindest zwei prognostizierten Parametersätze für den ersten und zweiten Fahrstreckenabschnitt mit dem aktuellen Wert des jeweiligen Parametersatzes vergleichen, der einen aktuellen Einflussfaktor repräsentiert. Dabei kann er zum Beispiel entscheiden, ob er ein stärkeres Offroad-Fahrerlebnis als aktuell bevorzugt oder in Kauf nehmen will.

Gemäß einer vorteilhaften Ausgestaltung wird ein Fahrzeugprofil bereitgestellt, das repräsentativ ist für das Fahrzeug. Mindestens ein Parameter des ersten Parametersatzes und/oder des zweiten Parametersatzes wird abhängig von dem Fahrzeugprofil ermittelt.

Dabei kann der erste Parametersatz und/oder der zweite Parametersatz abhängig von einer oder mehreren Eigenschaften des Fahrzeugs ermittelt werden, insbesondere in Bezug auf die Eigenschaften die unmittelbar oder mittelbar die Geländegängigkeit des Fahrzeugs betreffen.

Gemäß einer vorteilhaften Ausgestaltung wird ein Personenprofil bereitgestellt, das zumindest einem Fahrzeuginsassen zugeordnet ist. Mindestens ein Parameter des ersten Parametersatzes und/oder des zweiten Parametersatzes werden ermittelt abhängig von dem Personenprofil und/oder abhängig von mehreren Personenprofilen, falls mehrere Personenprofile bereitgestellt werden.

Ein Personenprofil kann z.B. repräsentierend sein für die persönliche Empfindlichkeit einer Person zu bestimmten Einflussfaktoren oder persönlichen Vorlieben bzw. Präferenzen zu bestimmten Einflussfaktoren. Es ist z.B. bekannt, dass unterschiedliche Personen unterschiedlich empfindlich zu verschiedenen vertikaldynamischen Beschleunigungseinflüssen bzw. querdynamischen Beschleunigungseinflüssen oder Schwingungen sind. Somit können auch diese Unterschiede berücksichtigt werden.

Gemäß einer vorteilhaften Ausgestaltung wird mindestens ein Parameter des ersten Parametersatzes und/oder des zweiten Parametersatzes mit einem vorgegebenen Höchstwert verglichen. Falls der Wert größer ist als der Höchstwert wird eine Information ermittelt zu zumindest einer möglichen Maßnahme, und/oder Umschaltdaten werden ermittelt zu einer, insbesondere automatischen, Veränderung einer Fahrzeugeinstellung.

Die Vorrichtung ist als portable Vorrichtung ausgebildet. Die Vorrichtung ist somit beispielsweise in einem portablen Navigationsgerät, Smartphone und/oder Tablet-PC ausgebildet. Die portable Vorrichtung kann bevorzugt ausgebildet sein zum:
- Ermitteln von Daten mittels einer Schnittstelle aus dem Fahrzeugbordnetz, und/oder
- Ermitteln von Daten aus einer Navigationskarte oder einer externen Datenbank, und/oder
- Ermitteln zumindest eines Personenprofil und/oder Fahrzeugprofil.

Gemäß weiteren Aspekten zeichnet sich die Erfindung aus durch ein System gemäß Anspruch 9, ein Computerprogramm gemäß Anspruch 10, sowie ein Computerprogrammprodukt gemäß Anspruch 11.

Das Computerprogrammprodukt umfasst ein von der Datenverarbeitungsvorrichtung lesbares Medium, auf dem der Programmcode gespeichert ist.

Bei dem Fahrzeug handelt es sich im Rahmen der Erfindung bevorzugt um ein Kraftfahrzeug oder Motorrad. Somit entstehen mehrere oben diskutierte Vorteile und mehrere weitere für den Fachmann nachvollziehbare Vorteile.

Ausführungsbeispiele der Erfindung sind im Folgenden anhand der schematischen Zeichnung näher erläutert.

Es zeigt:

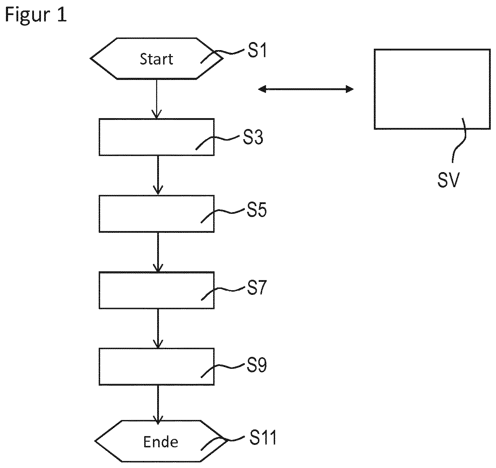

- Figur 1: ein Ablaufdiagramm eines Programms zur Anzeige von Einflussfaktoren von Fahrstreckenabschnitten auf ein Fahrzeug.

Figur 1 zeigt ein Ablaufdiagramm eines Programms zur Anzeige von Einflussfaktoren von Fahrstreckenabschnitten auf ein Fahrzeug.

Das Programm kann beispielsweise mittels einer Vorrichtung SV abgearbeitet werden, die insbesondere mindestens eine Recheneinheit, einen Programm- und Datenspeicher sowie beispielsweise eine oder mehrere Kommunikationsschnittstellen aufweist und die beispielsweise in einem Fahrzeug angeordnet ist. Der Programm- und Datenspeicher und die Recheneinheit der Vorrichtung SV können in einer Baueinheit und/oder verteilt auf mehrere Baueinheiten ausgebildet sein. Die Vorrichtung SV kann auch als portable Vorrichtung ausgebildet sein.

Die portable Vorrichtung ist beispielsweise dazu ausgestaltet, Daten mit dem Fahrzeug und einer Datenverarbeitungsvorrichtung auszutauschen, die insbesondere von dem Fahrzeug entfernt angeordnet ist.

Das Programm kann beispielsweise alternativ oder zusätzlich verteilt auf der Vorrichtung SV, insbesondere der portablen Vorrichtung, dem Fahrzeug und/oder der Datenverarbeitungsvorrichtung abgearbeitet werden.

Die Vorrichtung SV kann auch als Vorrichtung zur Anzeige von Einflussfaktoren von Fahrstreckenabschnitten auf ein Fahrzeug bezeichnet werden.

Das Programm wird in einem Schritt S1 gestartet, in dem beispielsweise Variablen initialisiert werden.

In einem Schritt S3 wird ein Ziel eines im Fahrzeug betriebenen Navigationssystems bereitgestellt. Alternativ oder zusätzlich wird eine Navigationskarte bereitgestellt. Alternativ oder zusätzlich werden Daten bereitgestellt, die von einem Server außerhalb des Fahrzeugs bereitgestellt werden. Insbesondere werden diese Daten in Abhängigkeit von zumindest einer Information über das Ziel oder eine Information aus einer Navigationskarte abgerufen.

In einem Schritt S5 wird insbesondere abhängig von den in dem Schritt S3 bereitgestellten Informationen, also dem Ziel und/oder der Navigationskarte und/oder den Daten, eine erste Information zu einem ersten Fahrstreckenabschnitt und eine zweite Information zu einem zweiten Fahrstreckenabschnitt ermittelt.

Der erste und der zweite Fahrstreckenabschnitt können beispielsweise im Wesentlichen übereinstimmen. Alternativ unterscheiden sich der erste und der zweite Fahrstreckenabschnitt zumindest teilweise.

Der erste Fahrstreckenabschnitt und der zweite Fahrstreckenabschnitt umfassen zumindest teilweise Teile einer vorgegebenen Fahrzeugroute.

Die erste Information und/oder die zweite Information werden beispielsweise in Abhängigkeit von einer Wahrscheinlichkeitsberechnung zu einer Route des Fahrzeugs, insbesondere bezüglich der Wahrscheinlichkeit zu der Auswahl des ersten Fahrstreckenabschnitts und des zweiten Fahrstreckenabschnitts ermittelt.

Alternativ oder zusätzlich werden Daten über die Fahrbahnbeschaffenheit mittels eines oder mehrerer perzeptiver Sensoren des Fahrzeugs ermittelt und die erste Information zu dem ersten Fahrstreckenabschnitt und/oder die zweite Information zu dem zweiten Fahrstreckenabschnitt in Abhängigkeit von den Daten ermittelt.

In einem Schritt S7 wird abhängig von der ersten Information mindestens ein erster Parametersatz ermittelt, der repräsentativ ist für mindestens einen Einflussfaktor beispielsweise einer physikalischen Fahrbahneigenschaft auf das Fahrzeug. Zusätzlich wird abhängig von der zweiten Information mindestens ein zweiter Parametersatz ermittelt, der repräsentativ ist für mindestens einen Einflussfaktor beispielsweise einer physikalischen Fahrbahneigenschaft auf das Fahrzeug. Stimmen der erste und der zweite Fahrstreckenabschnitt im Wesentlichen überein, so unterscheidet sich insbesondere der jeweilige Einflussfaktor, für den die jeweiligen Parametersätze repräsentativ sind. Stimmen der erste und der zweite Fahrstreckenabschnitt nicht überein, so kann sich der jeweilige Einflussfaktor unterscheiden, für den die jeweiligen Parametersätze repräsentativ sind oder alternativ gleich sein.

Zusätzlich wird im Schritt S7 eine Referenzgröße ermittelt, abhängig von einer Information, die repräsentativ ist für mindestens einen Einflussfaktor eines Fahrstreckenabschnitts, der bereits in der Vergangenheit vom Fahrer des Fahrzeugs und/oder von Fahrzeug befahren wurde oder aktuell befahren wird.

Der erste Parametersatz und der zweite Parametersatz können beispielsweise abhängig von mindestens einer physikalischen Fahrbahneigenschaft des jeweiligen Fahrstreckenabschnitts ermittelt werden. Diese können umfassen jeweils mehrere Werte der physikalischen Fahrbahneigenschaft innerhalb der Fahrstrecke bzw. eines Fahrstreckenabschnitts oder eine Funktion, die einen Verlauf der entsprechenden Werte repräsentiert.

Dabei ergibt sich ein besonderer Vorteil, dass auch ein Verlauf der Wechselwirkungen zwischen unterschiedlichen Einflussfaktoren ermittelt und in der Anzeige repräsentiert werden kann.

Alternativ oder zusätzlich kann ein Fahrzeugprofil bereitgestellt werden, das repräsentativ ist für das Fahrzeug und mindestens ein Parameter des ersten Parametersatzes und/oder des zweiten Parametersatzes abhängig von dem Fahrzeugprofil ermittelt werden.

Alternativ oder zusätzlich kann ein Parameter des ersten Parametersatzes und/oder des zweiten Parametersatzes ermittelt werden abhängig von Daten, die repräsentativ sind dafür, wie das Fahrzeug auf vorgegebene physikalische Fahrbahneigenschaften reagiert.

Alternativ oder zusätzlich wird der erste und der zweite Parametersatz beispielsweise abhängig von der aktuellen Beladung und/oder von der aktueller Sitzbelegung und/oder der aktueller Achslastverteilung des Fahrzeugs ermittelt.

Eine Beladung des Fahrzeugs kann die Empfindlichkeit des Fahrzeugs zu bestimmten Einflussfaktoren, insbesondere die Resonanzfrequenzen des Fahrzeugs wesentlich beeinflussen.

Auch kann die Beladung selbst sehr unterschiedliche Empfindlichkeit zu bestimmten Einflussfaktoren aufweisen. Besonders signifikant kann sich eine solche Empfindlichkeit bei Gefahrgut äußern.

Mit der Berücksichtigung der Beladung, insbesondere eines Beladungsprofils (analog Personenprofil), können die für das Befahren der ersten und zweiten Fahrstrecke relevanten Einflussfaktoren mittels Anzeige besser verglichen werden.

Alternativ oder zusätzlich wird ein Personenprofil bereitgestellt, das zumindest einem Fahrzeuginsassen zugeordnet ist und mindestens ein Parameter des ersten Parametersatzes und/oder des zweiten Parametersatzes wird abhängig von dem Personenprofil ermittelt.

Zumindest ein Parameter des ersten Parametersatzes und/oder zumindest ein Parameter des zweiten Parametersatzes repräsentieren beispielsweise einen vertikaldynamischen Einfluss auf das Fahrzeug.

Der erste Parametersatz und der zweite Parametersatz werden beispielsweise jeweils aus einer vorgegebenen Kombination der Fahrbahneigenschaften ermittelt, die unterschiedlichen Klassen von Fahrbahneigenschaften angehören.

Eine Klasse von Fahrbahneigenschaften betrifft beispielsweise permanente physikalische Fahrbahnunebenheiten.

Eine Klasse von Fahrbahneigenschaften betrifft beispielsweise physikalische Beschleunigungseinflüsse auf das Fahrzeug oder auf ein anderes Fahrzeug.

Der erste Parametersatz und/oder der zweite Parametersatz umfassen beispielsweise zumindest zwei Parameter, welche abhängig von zumindest zwei von folgenden Einflussfaktoren des Fahrstreckenabschnitts ermittelt werden:
- zumindest einem statistischen Wert, und/oder
- zumindest einem qualitativen Wert zur Art des Einflussfaktors, und/oder
- zumindest einem Verlaufswert des Einflussfaktors in Bezug auf Fahrtzeit oder Position.

In einem Schritt S9 wird abhängig von dem mindestens einen ersten Parametersatz und dem mindestens einen zweiten Parametersatz eine Anzeige erzeugt, die einen Einflussfaktor des ersten Fahrstreckenabschnitts und einen Einflussfaktor des zweiten Fahrstreckenabschnitts repräsentiert. Erfindungsgemäß repräsentiert die Anzeige auch einen Einflussfaktor des ersten Fahrstreckenabschnitts und einen Einflussfaktor des zweiten Fahrstreckenabschnitts in Bezug zu der vorgegebenen Referenzgröße.

Für die Anzeige wird beispielsweise eine grafische Darstellung durch eine Zuordnung oder Umrechnung nach einer vorgegebenen Formel der Parameter des ersten und/oder des zweiten Parametersatzes zu grafischen Elementen erzeugt.

Für die Anzeige wird beispielsweise zumindest ein statistischer Wert mittels Veränderung einer symbolischen Darstellung des Fahrzeugs repräsentiert und/oder zumindest ein qualitativer Wert zur Art des Einflussfaktors mittels Veränderung einer weiteren symbolischen Darstellung des Fahrzeugs repräsentiert und/oder zumindest ein Verlaufswert eines Parameters mittels eines Verlaufs nach Fahrtzeit oder nach Fahrstrecke repräsentiert.

Die erfindungsgemäße Anzeige kann auch als eine vergleichende Darstellung ausgestaltet sein, die einen Vergleich zumindest eines Einflussfaktors des ersten Fahrstreckenabschnitts mit zumindest einem Einflussfaktor des zweiten Fahrstreckenabschnitts repräsentiert. Dabei kann, bevorzugt mit grafischen Mitteln, eine Beziehung zwischen den jeweiligen Einflussfaktoren derselben oder korrespondierenden Art hergestellt werden.

Zusätzlich kann bei dem Verfahren ein Unterschied zwischen einem Einflussfaktor des ersten Fahrstreckenabschnitts und dem Einflussfaktor des zweiten Fahrstreckenabschnitts ermittelt werden und die Anzeige in Abhängigkeit von dem ermittelten Unterschied erzeugt werden.

Eine solche Anzeige kann dabei den ermittelten Unterschied oder eine Hervorhebung des ermittelten Unterschieds repräsentieren. Der Unterschied kann additive und/oder multiplikative und/oder logarithmische Komponenten umfassen.

Dabei kann die Anzeige z.B. eine Differenz, einen prozentualen Unterschied oder den für menschliche Wahrnehmung besonders signifikantes logarithmisches Verhältnis zumindest zweier Einflussfaktoren repräsentieren.

Der ermittelte Unterschied kann dabei auf eine Distanzeinheit, insbesondere die Länge des Fahrstreckenabschnitts normiert werden. Auch kann dabei der ermittelte Unterschied auf eine Zeiteinheit oder auf die Fahrtzeit normiert werden.

Somit können die, bevorzugt in der Anzeige hervorgehobenen Unterschiede durch den Benutzer "auf einen Blick" erfasst werden. Die Hervorhebung der Unterschiede kann dabei mit grafischen Mitteln, z.B. das Variieren der Farben, Größen, Linien, etc. erfolgen.

In einem Schritt S11 wird das Programm beendet und kann gegebenenfalls wieder in dem Schritt S1 gestartet werden.

Zusätzlich kann eine Information zu zumindest einer Maßnahme abhängig von mindestens einem Parameter des ersten Parametersatzes und/oder des zweiten Parametersatzes ermittelt werden, die den jeweiligen Einflussfaktor auf das Fahrzeug, insbesondere auf eine bestimmte Weise oder im vorausbestimmten Maße, verändert. Hieraufhin kann beispielsweise zusätzlich eine Information zu der ermittelten Maßnahme visualisiert werden, und/oder eine Bedienaktion des Fahrers visualisiert werden, die zu der Maßnahme führt, und/oder die Maßnahme aktiviert werden mit Mitteln des Fahrzeugs und eine Information für den Fahrer über diese Aktivierung visualisiert werden.

Die Maßnahme umfasst beispielsweise eine oder mehrere Umschaltoptionen für das Fahrwerk des Fahrzeugs und/oder für ein Fahrerassistenzsystem des Fahrzeugs.

Zusätzlich kann mindestens ein Parameter des ersten Parametersatzes und/oder des zweiten Parametersatzes mit einem vorgegebenen Höchstwert verglichen werden und, falls der Wert größer ist als der Höchstwert, eine Information zu zumindest einer möglichen Maßnahme ermittelt werden, und/oder Umschaltdaten ermittelt werden zu einer Veränderung einer Fahrzeugeinstellung.

## Patentansprüche

1. Verfahren zur Anzeige von Einflussfaktoren von Fahrstreckenabschnitten auf ein Fahrzeug, bei dem
- (S5) eine erste Information zu einem ersten Fahrstreckenabschnitt und eine zweite Information zu einem zweiten Fahrstreckenabschnitt ermittelt wird,
- (S7) abhängig von der ersten Information mindestens ein erster Parametersatz ermittelt wird, der repräsentativ ist für mindestens einen Einflussfaktor des ersten Fahrstreckenabschnitts auf das Fahrzeug,
- (S7) abhängig von der zweiten Information mindestens ein zweiter Parametersatz ermittelt wird, der repräsentativ ist für mindestens einen Einflussfaktor des zweiten Fahrstreckenabschnitts auf das Fahrzeug,
- (S9) abhängig von dem mindestens einen ersten Parametersatz und dem mindestens einen zweiten Parametersatz eine Anzeige erzeugt wird, die einen Einflussfaktor des ersten Fahrstreckenabschnitts und einen Einflussfaktor des zweiten Fahrstreckenabschnitts repräsentiert,
- und wobei der mindestens eine Parameter des ersten Parametersatzes und/oder des zweiten Parametersatzes abhängig von Daten ermittelt wird, welche repräsentativ dafür sind, wie das Fahrzeug auf vorgegebene physikalische Fahrbahneigenschaften reagiert,
wobei einem Fahrzeugführer für zumindest zwei mögliche bevorstehende, sich auf die Zukunft beziehende und zumindest teilweise Teile einer vorgegebenen Fahrzeugroute umfassende Fahrstreckenabschnitte eine grafische Darstellung oder eine Sequenz aus grafischen Darstellungen zur Anzeige gebracht wird, um dem Fahrzeugführer eine Übersicht über Einflussfaktoren mehrerer Streckenabschnitte zu geben,
wobei die erste Information und/oder die zweite Information in Abhängigkeit von einem Bereitstellen eines Ziel eines im Fahrzeug betriebenen Navigationssystems, und/oder einem Bereitstellen einer Navigationskarte, und/oder einem Bereitstellen von Daten, die von einem Server außerhalb des Fahrzeugs bereitgestellt werden, ermittelt wird,
**dadurch gekennzeichnet, dass**
die Anzeige einen Einflussfaktor des ersten Fahrstreckenabschnitts und einen Einflussfaktor des zweiten Fahrstreckenabschnitts in Bezug zu einer vorgegebenen Referenzgröße repräsentiert, welche abhängig von einer Information ermittelt wird, die repräsentativ ist für mindestens einen Einflussfaktor eines Fahrstreckenabschnitts, der bereits in der Vergangenheit von dem Fahrer des Fahrzeugs und/oder von dem Fahrzeug befahren wurde oder aktuell befahren wird.

2. Verfahren nach Anspruch 1, wobei zumindest ein Parameter des ersten Parametersatzes und/oder zumindest ein Parameter des zweiten Parametersatzes einen vertikaldynamischen Einfluss auf das Fahrzeug repräsentieren.

3. Verfahren nach einem der vorangegangenen Ansprüche, bei dem der erste Parametersatz und/oder der zweite Parametersatz zumindest zwei Parameter umfassen, welche abhängig von zumindest zwei von folgenden Einflussfaktoren des Fahrstreckenabschnitts ermittelt werden:
- zumindest einem statistischen Wert, und/oder
- zumindest einem qualitativen Wert zur Art des Einflussfaktors, und/oder
- zumindest einem Verlaufswert des Einflussfaktors in Bezug auf Fahrtzeit oder Position.

4. Verfahren nach einem die vorangegangenen Ansprüche, bei dem für die Anzeige eine grafische Darstellung durch eine Zuordnung oder Umrechnung nach einer vorgegebenen Formel der Parameter des ersten und/oder des zweiten Parametersatzes zu grafischen Elementen erzeugt wird.

5. Verfahren nach einem die vorangegangenen Ansprüche, bei dem für die Anzeige
- zumindest ein statistischer Wert mittels Veränderung einer symbolischen Darstellung des Fahrzeugs repräsentiert wird, und/oder
- zumindest ein qualitativer Wert zur Art des Einflussfaktors mittels Veränderung einer weiteren symbolischen Darstellung des Fahrzeugs repräsentiert wird, und/oder
- zumindest ein Verlaufswert eines Parameters mittels eines Verlaufs nach Fahrtzeit oder nach Fahrstrecke repräsentiert wird.

6. Verfahren nach einem der vorhergehenden Ansprüche, bei dem eine Information zu zumindest einer Maßnahme abhängig von mindestens einem Parameter des ersten Parametersatzes und/oder des zweiten Parametersatzes ermittelt wird, die den jeweiligen Einflussfaktor auf das Fahrzeug, insbesondere auf eine bestimmte Weise oder im vorausbestimmten Maße, verändert, ferner umfassend einen der folgenden Schritte:
- Visualisieren einer Information zu der ermittelten Maßnahme, und/oder
- Visualisieren einer Bedienaktion des Fahrers, die zu der Maßnahme führt, und/oder
- eine Aktivierung der Maßnahme mit Mitteln des Fahrzeugs und Visualisieren einer Information für den Fahrer über diese Aktivierung.

7. Verfahren nach einem der vorhergehenden Ansprüche, wobei ein Fahrzeugprofil bereitgestellt wird, das repräsentativ ist für das Fahrzeug, und wobei mindestens ein Parameter des ersten Parametersatzes und/oder des zweiten Parametersatzes abhängig von dem Fahrzeugprofil ermittelt wird.

8. Vorrichtung zur Anzeige von Einflussfaktoren von Fahrstreckenabschnitten auf ein Fahrzeug, wobei die Vorrichtung dazu ausgebildet ist, ein Verfahren nach einem der Ansprüche 1 bis 7 auszuführen.

9. System, wobei das System eine Vorrichtung, ein Fahrzeug und eine Datenverarbeitungsvorrichtung aufweist, wobei die Vorrichtung nach Anspruch 8 ausgebildet ist und eine portable Vorrichtung ist, und wobei die portable Vorrichtung dazu ausgestaltet ist, Daten mit dem Fahrzeug und der Datenverarbeitungsvorrichtung auszutauschen und das Verfahren nach einem der Ansprüche 1 bis 7 zusammen mit dem Fahrzeug und/oder der Datenverarbeitungsvorrichtung auszuführen.

10. Computerprogramm zur Anzeige von Einflussfaktoren von Fahrstreckenabschnitten auf ein Fahrzeug, wobei das Computerprogramm ausgebildet ist ein Verfahren nach einem der Ansprüche 1 bis 7 durchzuführen bei seiner Ausführung auf einer Datenverarbeitungsvorrichtung für ein System nach Anspruch 9 und/oder in einer Vorrichtung nach Anspruch 8.

11. Computerprogrammprodukt umfassend ein von einer Datenverarbeitungsvorrichtung lesbares Medium, auf dem der ausführbare Programmcode gemäß eines Computerprogramms nach Anspruch 10 gespeichert ist, wobei der Programmcode bei Ausführung durch eine Datenverarbeitungsvorrichtung für ein System nach Anspruch 9 oder durch eine Vorrichtung nach Anspruch 8 das Verfahren nach einem der Ansprüche 1 bis 7 ausführt.

## Claims

1. Method for displaying influence factors of road sections on a vehicle, in which
(S5)
• a first information on a first road section and a second information on a second road section is determined,
(S7)
• depending on the first information, at least one first parameter set is determined, which is representative of at least one influence factor of the first road section on the vehicle,
(S7)
• depending on the second information, at least one second parameter set is determined, which is representative of at least one influence factor of the second road section on the vehicle,
(S9)
• depending on the at least one first parameter set and the at least one second parameter set, a display is generated that represents an influence factor of the first road section and an influence factor of the second road section,
• and wherein the at least one parameter of the first parameter set and/or the second parameter set is determined depending on data which is representative of how the vehicle reacts to predetermined physical road characteristics,
wherein a vehicle driver is presented with a graphical representation or a sequence of graphical representations for at least two possible upcoming road sections relating to the future and at least partially comprising parts of a predetermined vehicle route, in order to give the vehicle driver an overview of influence factors of multiple road sections,
wherein the first information and/or the second information is determined depending on a provision of a destination of a navigation system operated in the vehicle, and/or a provision of a navigation map, and/or a provision of data provided by a server outside the vehicle, **characterized in that**
the display represents an influence factor of the first road section and an influence factor of the second road section in relation to a predetermined reference value,
which is determined depending on information that is representative of at least one influence factor of a road section that has already been traveled in the past by the driver of the vehicle and/or by the vehicle or is currently being traveled.

2. Method according to claim 1, wherein at least one parameter of the first parameter set and/or at least one parameter of the second parameter set represents a vertical-dynamic influence on the vehicle.

3. Method according to any one of the preceding claims, wherein the first parameter set and/or the second parameter set comprises at least two parameters which are determined depending on at least two of the following influence factors of the road section:
• at least one statistical value, and/or
• at least one qualitative value on the type of influence factor, and/or
• at least one progression value of the influence factor in relation to travel time or position.

4. Method according to any one of the preceding claims, wherein for the display, a graphical representation is generated by an assignment or conversion according to a predetermined formula of the parameters of the first and/or the second parameter set to graphical elements.

5. Method according to any one of the preceding claims, wherein for the display
• at least one statistical value is represented by changing a symbolic representation of the vehicle, and/or
• at least one qualitative value on the type of influence factor is represented by changing a further symbolic representation of the vehicle, and/or
• at least one progression value of a parameter is represented by a progression according to travel time or travel distance.

6. Method according to any one of the preceding claims, wherein information on at least one measure is determined depending on at least one parameter of the first parameter set and/or the second parameter set, which changes the respective influence factor on the vehicle, in particular in a specific way or to a predetermined extent, further comprising one of the following steps:
• visualizing information on the determined measure, and/or
• visualizing an operating action of the driver that leads to the measure, and/or
• an activation of the measure with means of the vehicle and visualizing information for the driver about this activation.

7. Method according to any one of the preceding claims, wherein a vehicle profile is provided that is representative of the vehicle, and wherein at least one parameter of the first parameter set and/or the second parameter set is determined depending on the vehicle profile.

8. Device for displaying influence factors of road sections on a vehicle, wherein the device is designed to execute a method according to any one of claims 1 to 7.

9. System, wherein the system has a device, a vehicle and a data processing device,
wherein the device is designed according to claim 8 and is a portable device, and
wherein the portable device is configured to exchange data with the vehicle and the data processing device and to execute the method according to any one of claims 1 to 7 together with the vehicle and/or the data processing device.

10. Computer program for displaying influence factors of road sections on a vehicle,
wherein the computer program is designed to carry out a method according to any one of claims 1 to 7 when executed on a data processing device for a system according to claim 9 and/or in a device according to claim 8.

11. Computer program product comprising a computer-readable medium on which the executable program code according to a computer program according to claim 10 is stored, wherein the program code, when executed by a data processing device for a system according to claim 9 or by a device according to claim 8, executes the method according to any one of claims 1 to 7.

## Revendications

1. Procédé d'affichage des facteurs d'influence des sections de route sur un véhicule, dans lequel
(S5)
• une première information sur une première section de route et une deuxième information sur une deuxième section de route sont déterminées,
(S7)
• en fonction de la première information, au moins un premier ensemble de paramètres est déterminé, qui est représentatif d'au moins un facteur d'influence de la première section de route sur le véhicule,
(S7)
• en fonction de la deuxième information, au moins un deuxième ensemble de paramètres est déterminé, qui est représentatif d'au moins un facteur d'influence de la deuxième section de route sur le véhicule,
(S9)
• en fonction d'au moins le premier ensemble de paramètres et d'au moins le deuxième ensemble de paramètres, un affichage est généré qui représente un facteur d'influence de la première section de route et un facteur d'influence de la deuxième section de route,
• et où au moins un paramètre du premier ensemble de paramètres et/ou du deuxième ensemble de paramètres est déterminé en fonction de données qui sont représentatives de la façon dont le véhicule réagit à des caractéristiques physiques prédéterminées de la route,
dans lequel un conducteur de véhicule se voit présenter une représentation graphique ou une séquence de représentations graphiques pour au moins deux sections de route possibles à venir se rapportant à l'avenir et comprenant au moins partiellement des parties d'un itinéraire de véhicule prédéterminé, afin de donner au conducteur de véhicule un aperçu des facteurs d'influence de plusieurs sections de route,
dans lequel la première information et/ou la deuxième information est déterminée en fonction de la fourniture d'une destination d'un système de navigation exploité dans le véhicule, et/ou de la fourniture d'une carte de navigation, et/ou de la fourniture de données fournies par un serveur extérieur au véhicule, **caractérisé en ce que** l'affichage représente un facteur d'influence de la première section de route et un facteur d'influence de la deuxième section de route par rapport à une valeur de référence prédéterminée, qui est déterminée en fonction d'une information représentative d'au moins un facteur d'influence d'une section de route qui a déjà été parcourue dans le passé par le conducteur du véhicule et/ou par le véhicule ou qui est actuellement parcourue.

2. Procédé selon la revendication 1, dans lequel au moins un paramètre du premier ensemble de paramètres et/ou au moins un paramètre du deuxième ensemble de paramètres représente une influence verticale-dynamique sur le véhicule.

3. Procédé selon l'une quelconque des revendications précédentes, dans lequel le premier ensemble de paramètres et/ou le deuxième ensemble de paramètres comprend au moins deux paramètres qui sont déterminés en fonction d'au moins deux des facteurs d'influence suivants de la section de route :
• au moins une valeur statistique, et/ou
• au moins une valeur qualitative sur le type de facteur d'influence, et/ou
• au moins une valeur de progression du facteur d'influence par rapport au temps de trajet ou à la position.

4. Procédé selon l'une quelconque des revendications précédentes, dans lequel pour l'affichage, une représentation graphique est générée par une attribution ou une conversion selon une formule prédéterminée des paramètres du premier et/ou du deuxième ensemble de paramètres en éléments graphiques.

5. Procédé selon l'une quelconque des revendications précédentes, dans lequel pour l'affichage
• au moins une valeur statistique est représentée par la modification d'une représentation symbolique du véhicule, et/ou
• au moins une valeur qualitative sur le type de facteur d'influence est représentée par la modification d'une autre représentation symbolique du véhicule, et/ou
• au moins une valeur de progression d'un paramètre est représentée par une progression selon le temps de trajet ou la distance de trajet.

6. Procédé selon l'une quelconque des revendications précédentes, dans lequel une information sur au moins une mesure est déterminée en fonction d'au moins un paramètre du premier ensemble de paramètres et/ou du deuxième ensemble de paramètres, qui modifie le facteur d'influence respectif sur le véhicule, en particulier d'une manière spécifique ou dans une mesure prédéterminée, comprenant en outre l'une des étapes suivantes :
• visualiser une information sur la mesure déterminée, et/ou
• visualiser une action de commande du conducteur qui conduit à la mesure, et/ou
• une activation de la mesure avec des moyens du véhicule et visualiser une information pour le conducteur sur cette activation.

7. Procédé selon l'une quelconque des revendications précédentes, dans lequel un profil de véhicule représentatif du véhicule est fourni, et dans lequel au moins un paramètre du premier ensemble de paramètres et/ou du deuxième ensemble de paramètres est déterminé en fonction du profil du véhicule.

8. Dispositif d'affichage des facteurs d'influence des sections de route sur un véhicule, le dispositif étant conçu pour exécuter un procédé selon l'une quelconque des revendications 1 à 7.

9. Système, le système comportant un dispositif, un véhicule et un dispositif de traitement de données, le dispositif étant conçu selon la revendication 8 et étant un dispositif portable, et le dispositif portable étant configuré pour échanger des données avec le véhicule et le dispositif de traitement de données et pour exécuter le procédé selon l'une quelconque des revendications 1 à 7 conjointement avec le véhicule et/ou le dispositif de traitement de données.

10. Programme informatique pour afficher les facteurs d'influence des sections de route sur un véhicule, le programme informatique étant conçu pour exécuter un procédé selon l'une quelconque des revendications 1 à 7 lors de son exécution sur un dispositif de traitement de données pour un système selon la revendication 9 et/ou dans un dispositif selon la revendication 8.

11. Produit de programme informatique comprenant un support lisible par ordinateur sur lequel est stocké le code de programme exécutable selon un programme informatique selon la revendication 10, le code de programme, lorsqu'il est exécuté par un dispositif de traitement de données pour un système selon la revendication 9 ou par un dispositif selon la revendication 8, exécutant le procédé selon l'une quelconque des revendications 1 à 7.
